# EUROPEAN PATENT APPLICATION

(11) **EP 3 950 084 A1**
(43) Date of publication of application: **09.02.2022**
(21) Application number: 20776337.6
(22) Date of filing: 25.03.2020
(51) Int. Cl.: B01D 9/02, C01D 15/08

(54) **METHOD FOR CRYSTALLIZING CARBONATE AND METHOD FOR PURIFYING CARBONATE**

(30) Priority: 27.03.2019 JP 2019061631
(71) Applicant: JX Nippon Mining & Metals Corporation, Tokyo 105-8417 (JP)
(72) Inventor: ARIYOSHI,Hirotaka, Hitachi-shi, Ibaraki 317-0056 (JP); TOMITA,Isao, Hitachi-shi, Ibaraki 317-0056 (JP); ABE,Hiroshi, Hitachi-shi, Ibaraki 317-0056 (JP)
(74) Representative: Arnold & Siedsma
(86) International application number: PCT/JP2020/013469
(87) International publication number: WO 2020/196675

(57) **Abstract**

A method for crystallizing a carbonate includes heating an aqueous solution containing metal ions, and carbonate ions and/or bicarbonate ions in a presence of a seed crystal in the aqueous solution to crystallize a carbonate.

## Description

### FIELD OF THE INVENTION

This specification discloses arts relating to a method for crystallizing a carbonate and a method for purifying a carbonate.

### BACKGROUND OF THE INVENTION

A compound in an aqueous solution is generally recovered by crystallization. For example, if a solid is to be obtained as a carbonate salt in the recovery of valuable metals from lithium ion secondary battery waste, the solid is generally obtained by crystallizing a carbonate salt of a metal from an aqueous solution containing certain metal ions, and carbonate and/or bicarbonate ions. More particularly, the aqueous solution is heated to a predetermined temperature, concentrated, and in some cases, solidified to dryness.

### SUMMARY OF THE INVENTION

### Technical Problem

In the crystallization of the carbonate as described above, most of the carbonate precipitated by heating and concentrating adhere to an inner surface of a crystallizer in a massive manner, so that they cannot be obtained in the form of powder. This problem is particularly apparent when the crystallizer is larger. The carbonate that adheres to the interior of the crystallizer needs to be removed from the crystallizer and then crushed or washed, which will increase the man-hours and costs.

This specification discloses a method for crystallizing a carbonate and a method for purifying a carbonate, which can suppress the adhesion of the carbonate to the interior of the crystallizer.

### Solution to Problem

A method for crystallizing a carbonate disclosed in this specification comprises heating an aqueous solution containing metal ions, and carbonate ions and/or bicarbonate ions in a presence of a seed crystal in the aqueous solution to crystallize a carbonate.

Further, a method for purifying a carbonate disclosed in this specification uses the method for crystallizing a carbonate as described above.

### Advantageous Effects of Invention

According to the method for crystallizing a carbonate disclosed in this specification, it is possible to suppress adhesion of a carbonate to an interior of a crystallizer.

### BRIEF DESCRIPTION OF THE DRAWINGS

FIG. 1 is a flow chart showing a method for purifying a carbonate according to an embodiment; and
FIG. 2 is a flow chart showing a method for purifying lithium carbonate according to Example.

### DETAILED DESCRIPTION OF THE INVENTION

Hereinafter, embodiment of a method for crystallizing a carbonate disclosed in this specification are described in detail.

In an embodiment of a method for crystallizing a carbonate, a seed crystal containing a carbonate of the same species as that of the carbonate to be crystallized is added or otherwise made present in an aqueous solution containing metal ions, and carbonate ions and/or bicarbonate ions, and the aqueous solution is heated in the presence of the seed crystal to crystallize the carbonate.

In this embodiment, the presence of the seed crystal prevents the carbonate from adhering to an interior of a crystallizer, so that a large amount of the carbonate is deposited as a powder. As a result, works of pulling off the carbonate adhering to the interior of the crystallizer, crushing it, cleaning it, and the like are reduced or eliminated, thus preventing an increase in man-hours and costs.

### (Aqueous Solution)

The aqueous solution is not particularly limited as long as it contains metal ions of a metal making up the carbonate to be crystallized and at least one of carbonate ions and hydrogen carbonate ions, and various types of aqueous solutions may be applied as such.

Specific examples of such an aqueous solution include an aqueous solution for purification of carbonates such as lithium carbonate. An example of specific procedures for the purification of lithium carbonate will be described later.

The purification of such lithium carbonate and the like may be carried out in processes such as those for recovering valuable metals from lithium ion secondary battery waste by a wet process. In the wet process, for example, lithium ion secondary battery waste that has been optionally processed by roasting, crushing, and sieving, and the like, is leached with an acid such as sulfuric acid, hydrochloric acid, or other mineral acid. The leached solution is then subjected to neutralization, sulfurization, or solvent extraction to remove iron, aluminum, copper, and other metals, and at least one of cobalt, nickel, and manganese remaining in the solution is sequentially recovered by solvent extraction or back extraction under conditions appropriate for each metal. As a result, the crude lithium carbonate as described above is obtained.

It is considered that the metal ions contained in the aqueous solution are various types of ions that can make up the carbonates. Specific examples include, in addition to Li, any one of Na, Mg, or Ca ions.

For example, the carbonate of Na is Na₂CO₃, which can be obtained by crystallizing Na₂CO₃ produced by the reaction: 2NaOH + CO₂ → Na₂CO₃ + H₂O.

The carbonate of Mg is MgCO₃, which can be crystallized while adding sodium carbonate or calcium carbonate to an aqueous magnesium salt solution and allowing them to react. The carbonate of Ca is CaCO₃, which can be synthesized by mixing an aqueous soluble calcium salt solution such as Ca²⁺ (aq) + CO₃²⁻ → CaCO₃ and calcium chloride with a soluble carbonate salt solution such as sodium carbonate, and calcium carbonate can be obtained using crystallization.

Thus, for the carbonate formed of any one ion of Na, Mg, or Ca in addition to Li, the solid of the carbonate can be obtained by crystallization using the present invention.

If Li is contained in the aqueous solution, the concentration of Li ions in the aqueous solution may be, for example, from 3.0 g/L to 9.0 g/L, typically from 6.0 g/L to 8.0 g/L

Other ions such as Cl ions and/or SO₄ ions may be contained in the aqueous solution.

For example, in the purification of the carbonate as described above, a carbon dioxide gas or a carbonate salt is added to the aqueous solution in which the crude lithium carbonate has been dissolved.

### (Crystallization Method)

In order to crystallize the carbonate from the aqueous solution as described above, the aqueous solution is heated to release the carbon dioxide gas and concentrate the aqueous solution.

In this embodiment, the seed crystal is present in the aqueous solution, whereby the seed crystal in the aqueous solution acts as a nucleus to promote the growth of the carbonate. As a result, even in a larger crystallizer, the carbonate does not adhere to the interior of the crystallizer, and a powdery carbonate can be obtained.

In other words, if there is no seed crystal in the aqueous solution, in particular, the use of the larger crystallizer causes the carbonate precipitated by heating and concentrating to adhere to the inner surface of the crystallizer, an internal heat exchanger, stirring blades, etc., in a very massive form. In this case, the carbonate adhering to the interior of the crystallizer needs to be removed, crushed, and cleaned, leading to an increase in man-hours and costs. In this embodiment, such an increase in man-hours and costs can be prevented. The powdery carbonate also has an advantage of being easy to handle.

The seed crystal is generally added to the aqueous solution before heating, but it may be added during heating. At the latest, the seed crystal may be present in the aqueous solution until the release of carbonic acid starts.

The seed crystal should generally include a carbonate of the same species as that of the carbonate to be crystallized, i.e., a carbonate of the metal that makes up the carbonate to be crystallized (i.e., of the same type as the metal ion in the aqueous solution). It is preferable that impurities in the seed crystal are as free as possible.

An amount of the seed crystal added may preferably be at least 35% by mass of an amount of a carbonate crystallized, assuming that all the metal ions in the aqueous solution are crystallized as the carbonate. This is because if the amount is less than 35% by mass of the amount of the carbonate crystallized, the action of the seed crystal may not be sufficient due to the smaller amount of the seed crystal, so that the adhesion of the carbonate to the interior of the crystallizer may not be suppressed as expected. However, the preferred lower limit of the amount of the seed crystal may vary depending on the reaction system, the intensity of stirring during crystallization or other conditions. On the other hand, if there are too many seed crystals, there is a risk of the carbonate adhering to the interior of the crystallizer due to insufficient stirring caused by an increase in pulp concentration in the system. From this point of view, the amount of the seed crystal added may more preferably be from 40% by mass to 70% by mass of the amount of the above metal ions in the aqueous solution that will be crystallized as the carbonate.

The seed crystal may preferably have an average particle diameter D50 of from 60 µm to 90 µm, and more preferably from 70 µm to 80 µm. If the average particle diameter D50 of the seed crystal is too small, it may float during addition and not function as a seed crystal. On the other hand, if the average particle diameter D50 of the seed crystal is too large, there is a concern that it may cause adhesion and that new nucleation cannot be suppressed. The average particle diameter D50 of the seed crystal means a particle diameter where a cumulative distribution on a volume basis is 50% in a particle size distribution that can be measured by the laser diffraction/scattering method according to JIS Z 8825. The average particle diameter D50 of the carbonate as described below can also be measured in the same manner. The above range of the average particle diameter D50 of the seed crystal can be based on the particle size distribution when it is assumed that the carbonate obtained by the same or equivalent crystallization method previously conducted is repeatedly used as the seed crystal, as described below. In this case, the particle diameter of the seed crystal may vary depending on conditions such as the stirring state at the time of the previous crystallization.

The average particle diameter D50 of the carbonate in the form of powder or the like obtained by crystallization described herein is preferably in a range of from 90% to 110%, and more preferably in a range of from 95% to 105%, of the average particle diameter D50 of the seed crystal as described above. The reason why the average particle diameter D50 of the carbonate becomes relatively small like this would be due to collision of the carbonates precipitated during a decarbonation reaction by stirring or the like. If the average particle diameter D50 of the carbonate is less than 90% of the average particle diameter of the seed crystal, washing may be difficult due to the smaller particle diameter of the carbonate, and if it is greater than 110%, the amount of impurities entrained in the crystal may increase, and the washing effect for the purpose of removing the impurities may be reduced. The smaller particle diameter of the carbonate leads to easy washing, so that it is advantageous from the viewpoint of reducing the impurity quality. It should be noted that the carbonate to be used as a final product may optionally be crushed, leading to further different particle diameters.

More specifically, depending on the crystallization conditions, the average particle diameter D50 of the carbonate may be in the range of from 70 µm to 80 µm. It should be noted that a 90% particle diameter D90 of the carbonate may be in the range of from 190 µm to 210 µm. The 90% particle diameter D90 refers to a particle diameter where a cumulative distribution on a volume basis is 90% in the particle size distribution obtained in the same method as that of the average particle diameter D50 as described above.

However, the particle size distribution of the carbonate may vary depending on the system, and it is desirable to set a vessel shape, stirring conditions, etc., to obtain the desired particle diameter, as needed.

When releasing the carbon dioxide gas, the aqueous solution can be stirred using a predetermined stirrer or the like. The stirring conditions are preferably a high stirring speed and a blade shape with a large shearing force. This can allow the carbonate having the smaller particle diameter as described above to be obtained.

In this case, the aqueous solution can be heated to a temperature of 50 °C to 90°C. If the heating temperature of the aqueous solution is less than 50 °C, the carbonic acid may not be effectively released. On the other hand, if the heating temperature is more than 90°C, a problem may occur due to boiling. Therefore, the upper limit may be 90 °C. However, since the problem due to boiling may not be caused, the temperature may be further increased depending on the heat resistance temperature of the apparatus. A higher temperature is more desirable to prevent the carbonate from adhering to the interior of the crystallizer. From this point of view, the heating temperature of the lithium dissolved solution may preferably be from 70 °C to 80 °C.

This can allow the solution to be heated and concentrated about three times in volume ratio, and the solution may be heated and concentrated until it is evaporated and dried.

As the seed crystal, for example, it is suitable to use the carbonate obtained by the same crystallization method previously conducted. In this case, since it is not necessary to prepare the seed crystal separately, it is possible to reduce the man-hours required for the preparation of the seed crystal and to reduce the costs.

### (Purification Method)

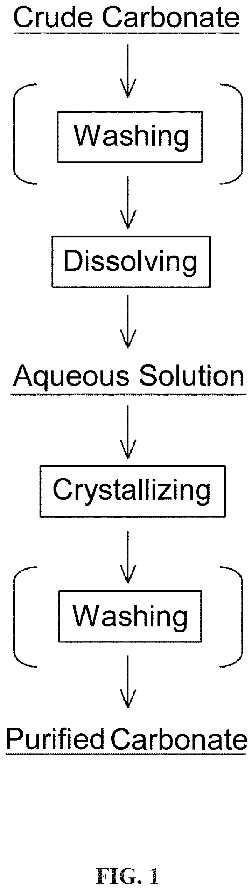

The method for purifying the carbonate as described above can be used, for example, to purify a carbonate as described below. As illustrated in FIG. 1, the method for purifying the carbonate in this embodiment includes: a dissolution step of dissolving a crude carbonate having a lower quality than that of a purified carbonate finally obtained by the purification method in a liquid such as pure water while feeding a carbon dioxide gas to obtain an aqueous solution containing metal ions, and carbonate and/or bicarbonate ions; and a crystallization step of crystallizing the aqueous solution to obtain the carbonate as described above. If necessary, the method may further include a washing step of washing the crude carbonate before the dissolution step and/or a washing step of washing the carbonate after the crystallization step.

In the washing step before the dissolution step, the crude carbonate can be subjected to repulp washing with washing water at a temperature of 50 °C to 90 °C, for example. The repulp washing means that a cake obtained after solid-liquid separation is introduced into a predetermined amount of water and stirred to make a slurry, and the solid-liquid separation operation is then carried out again. This can allow at least some of the impurities that may be contained in the crude carbonate to be removed. A plurality of washing operations may be carried out.

In the dissolution step, for example, the crude carbonate can first be repulped with pure water or other liquid. The word "repulped" or "repulping" as used herein means that a cake obtained after solid-liquid separation is introduced into a predetermined amount of water and stirred to make a slurry. Then, the carbon dioxide gas is blown into the liquid and fed to dissolve the carbonic acid in the liquid. In this way, for example, when the method is carried out for the crude lithium carbonate as the carbonate, the crude lithium carbonate is dissolved in the liquid by the reaction: Li₂CO₃ + H₂CO₃ → 2LiHCO₃, and an aqueous solution is obtained as a lithium hydrogen carbonate solution.

When dissolving the carbonate, the liquid into which the carbonate has been introduced may optionally be stirred with a stirrer.

The reaction endpoint can be controlled by pH. Specifically, the blowing of the carbon dioxide gas can be stopped at the time when the pH becomes, for example, 7.6 to 7.9, and more preferably 7.6 to 7.7.

The crystallization step can be carried out in the same method as that of the crystallization described above, so any repetitive description thereof will be omitted here.

The washing step after the crystallization step can be carried out under the same conditions and methods as those of the washing step before the dissolution step as described above. This may allow for removal of impurities derived from the adhering water that may be contained in the carbonate, such as SO₄ and even Na.

By undergoing each of the steps as described above, a purified carbonate with a higher purity than that of the crude carbonate can be obtained.

### EXAMPLES

The method for crystalizing a carbonate as described above was experimentally conducted and its effects were confirmed as described below. However, the description herein is merely for the purpose of illustration and is not intended to be limited thereto.

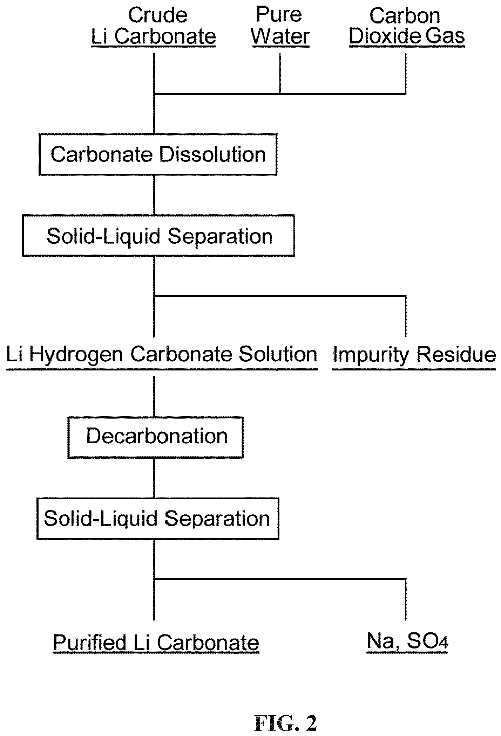

Each of the steps shown in FIG. 2 was carried out to purify a crude lithium carbonate to obtain a purified lithium carbonate. The impurity qualities of the lithium carbonate before and after purification are shown in Table 1. Amounts of impurities not listed here were less than 10 ppm by mass from the stage before purification.

**[Table 1]**

| | | | |
|---|---|---|---|
| (ppm by mass) | Na | Ca | SO₄ |
| Before Purification | 3,700 | 490 | 5,600 |
| After Purification | 77 | 71 | 310 |

At the time of decarbonation (crystallization), tests were conducted under different conditions with and without the addition of the seed crystal and with different amounts of seed crystals as shown in Table 2, and changes in the degree of lithium carbonate adhering to the interior of the crystallizer were confirmed by changing those conditions. The results are shown in Table 2 as an amount of purified lithium carbonate recovered.

The seed crystal used here was powdery lithium carbonate, which was added in the range of from 0 to 0.02 (kg-dry/L) as an amount relative to an amount (L) of carbonate dissolved solution, which was the liquid in which the crude lithium carbonate was dissolved. The average particle diameter D50 of the seed crystal was from 70 to 80 µm, typically 75 µm. The heating temperature was in the range of from 60 to 90 °C.

**[Table 2]**

| Seed Crystal Addition Ratio | Seed Crystal Added Amount | Amount of Carbonate Dissolved Solution | Amout of Purified Lithium | Carbonate Recovered |
|---|---|---|---|---|
| | | | Including Seed Crystal Content | Subtracting Seed Crystal Content |
| (kg-dry/L) | (kg-dry) | (L) | (kg-dry) | (kg-dry) |
| 0.000 | 0 | 149 | 2,580 | 2,580 |
| 0.002 | 300 | 151 | 3,549 | 3,249 |
| 0.005 | 750 | 151 | 4,752 | 4,002 |
| 0.007 | 1130 | 153 | 5,461 | 4,331 |
| 0.010 | 1500 | 152 | 5,329 | 3,829 |
| 0.020 | 3000 | 152 | 7,042 | 4,042 |

It is found from Table 2 that the amount of purified Li carbonate recovered is increased by adding the seed crystal, indicating that this would effectively suppress the adhesion of Li carbonate to the interior of the crystallizer.

In the test where the seed crystal was added, it was visually confirmed that the adhesion of lithium carbonate to the inner surface of the crystallizer was significantly reduced, and that substantially all of the obtained lithium carbonates were in the form of powder. In particular, when the heating temperature was set at 50 °C or higher, such as 60°C or 90°C, the adhesion of lithium carbonate was significantly suppressed. The lithium carbonate added as the seed crystal could also be recovered together with the precipitated lithium carbonate, and no loss occurred. The average particle diameter D50 of the lithium carbonate obtained herein was about 75 µm.

On the other hand, in the test where no seed crystal was added, the precipitated lithium carbonate was not obtained in the form of powder. Also, the carbonate firmly adhered to the inner surface of the crystallizer in a massive form, and could be pulled off by hands, but it still needed to be crushed and washed thereafter, which would thus increase man-hours and costs.

While the test of lithium carbonate has been described as an example, the present invention is not limited to lithium carbonate. Specifically, since Na, Mg, or Ca carbonate is produced and widely used, and the present invention can be applied to those carbonates as well.

## Claims

1. A method for crystallizing a carbonate, comprising heating an aqueous solution containing metal ions, and carbonate ions and/or bicarbonate ions in a presence of a seed crystal in the aqueous solution to crystallize a carbonate.

2. The method for crystallizing a carbonate according to claim 1, wherein the metal ions are ions of any one of Li, Na, Mg and Ca.

3. The method for crystallizing a carbonate according to claim 1 or 2, wherein the seed crystal is present in the aqueous solution in an amount that is 35% by mass or more of an amount of the metal ions crystallized as the carbonate.

4. The method for crystallizing the carbonate according to any one of claims 1 to 3, wherein an average particle diameter D50 of the carbonate obtained by crystallization is in a range of from 90% to 110% of an average particle diameter D50 of the seed crystal.

5. The method for crystallizing a carbonate according to any one of claims 1 to 4, wherein an average particle diameter D50 of the seed crystal is in a range of from 60 µm to 90 µm.

6. The method for crystallizing a carbonate according to any one of claims 1 to 5, wherein the carbonate crystallized by the method for crystallizing a carbonate according to any one of claims 1 to 5 is used as the seed crystal.

7. A method for purifying a carbonate, comprising using the method for crystallizing a carbonate according to any one of claims 1 to 6.
